(19) Europäisches Patentamt
European Patent Office
Office européen des brevets

(11) **EP 1 190 877 B1**

(12) **EUROPÄISCHE PATENTSCHRIFT**

(45) Veröffentlichungstag und Bekanntmachung des Hinweises auf die Patenterteilung:
**14.11.2007 Patentblatt 2007/46**

(51) Int Cl.:
***B60H 1/00*** *(2006.01)*

(21) Anmeldenummer: **01122929.1**

(22) Anmeldetag: **25.09.2001**

(54) **Regelung der Heiz- und Kühlleistung bei der Fahrzeugklimatisierung**

Regulation device for controlling heating and cooling capacity in vehicle air conditioning

Dispositif de régulation de la capacité de chauffage et de refroidissement dans les installations de climatisation de véhicule

(84) Benannte Vertragsstaaten:
**DE ES FR GB IT SE**

(30) Priorität: **25.09.2000 DE 10047710**

(43) Veröffentlichungstag der Anmeldung:
**27.03.2002 Patentblatt 2002/13**

(73) Patentinhaber: **Behr-Hella Thermocontrol GmbH**
**D-70469 Stuttgart (DE)**

(72) Erfinder:
• **Trapp, Ralph, Dr. Ing.**
**33102 Paderborn (DE)**
• **Knittel, Otto, Dipl.-Ing.**
**59494 Soest (DE)**
• **Gremme, Johannes, Dipl.-Ing.**
**59555 Lippstadt (DE)**
• **Decius, Andreas, Dipl.-Ing.**
**59558 Lippstadt (DE)**
• **Hamann, Marwin, Dr.rer.Nat.**
**59555 Lippstadt (DE)**

(74) Vertreter: **Hilleringmann, Jochen et al**
**Patentanwälte**
**Von Kreisler-Selting-Werner,**
**Bahnhofsvorplatz 1 (Deichmannhaus am Dom)**
**50667 Köln (DE)**

(56) Entgegenhaltungen:
**EP-A- 0 872 368     US-A- 5 603 226**
**US-A- 5 832 990**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft eine Vorrichtung zur Regelung der Temperatur im Innenraum eines Fahrzeuges und insbesondere die bei einer derartigen Vorrichtung unterlagerte Regelung der Heiz- und Kühlleistung, wie sie z.B. aus DE 42 14 687 A1 bekannt ist.

## Stand der Technik

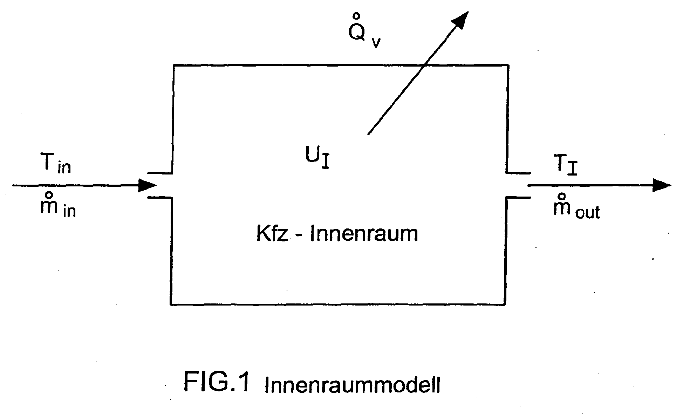

Um die Innenraumtemperatur im Kraftfahrzeug zu beeinflussen wird entsprechend temperierte Luft über Auslassdüsen ins Wageninnere geleitet. Bei Fahrzeugen, die mit einem Klimaautomaten ausgerüstet sind, wird die Ausblastemperatur automatisch eingestellt. Bei bestimmten Klimakonzepten wird diese Temperatur über einen der Innenraumtemperaturregelung unterlagerten Regelkreis auf den geforderten Wert eingestellt. Mit Hilfe dieses Regelkreises ist es möglich, Toleranzen der Luftführungselemente sowie Störeinflüsse zu kompensieren und auf diese Weise den Komfort im Fahrzeug zu erhöhen. Die Ausblastemperatur richtet sich hierbei nach der jeweils benötigten Heizleistung. Diese wird wiederum von unterschiedlichen Faktoren, wie Außentemperatur, Sonnenintensität usw. bestimmt. Als eine vereinfachte Beschreibung des Aufheiz- bzw. Abkühlvorgangs des Fahrzeuginnenraumes soll zeichnerisch in Fig. 1 dargestellte Modell dienen.

Unter Vernachlässigung der Änderungen der kinetischen und potentiellen Energien ist nach dem ersten Hauptsatz der Thermodynamik die Summe der Wärmestrome $\dot{m}_{in}u_{in} + \dot{m}_{out}u_{out}$ in das bzw. aus dem Auto gleich der Summe aus Änderung der inneren Energie $\dot{U}_I$, Verlustwärmestrom $\dot{Q}_V$, der z.B. durch Konvektion entsteht und technischer Leistung $\dot{W}$, die durch die Druck-, bzw.

Volumendifferenz der ein- und ausströmenden Luft verbraucht wird. Die Größe $\dot{m}$ kennzeichnet hierbei den Massen(luft-)strom und u die spezifische innere Energie. Vereinfachen wird angenommen, dass die Massenströme die in das bzw. aus dem Auto gelangen gleichen Betrag und unterschiedliches Vorzeichen haben. Die dem Fahrzeuginneren zugeführte Heizleistung errechnet sich somit zu:

$$P_{Heiz} = c\dot{m}_{in}\left(T_{in} - T_I\right) = \ddot{U}_I + \dot{Q}_V + \dot{W} \qquad \text{Gl. 1}$$

Die Konstante $c$ repräsentiert hierbei die Wärmekapazität der Luft und $T$ die absolute Temperatur.

Die zum Temperieren benötigte Heizleistung wird bei herkömmlichen Klimaautomaten aus den jeweiligen klimatischen Verhältnissen abgeleitet und über die Temperatur $T_{in}$ (siehe Gl. 1) eingestellt. Hierbei wird vorausgesetzt, dass der Massenstrom aus der Stellung der Ventilklappen und der Lüfterleistung abgeleitet werden kann. Untersuchungen zeigten jedoch, dass der Massenstrom von den jeweils herrschenden Druckverhältnissen und den Fertigungstoleranzen beeinflusst wird. Diese Effekte führen trotz geregelter Ausblastemperatur bei den heutigen Klimaanlagen zu schwankender Heizleistung, die sich nachteilig auf den Komfort auswirkt. Weiterhin ist der Zusammenhang zwischen den Stellungen der Ventilklappen und dem Massenstrom stark nichtlinear. Dies führt dazu, dass bei der Abstimmung der Klimaregler etliche Kennfelder im Prozessor gespeichert werden müssen.

## Erfindung

Mit der Erfindung wird eine Vorrichtung zur Regelung der Temperatur im Innenraum eines Fahrzeuges vorgeschlagen, die versehen ist mit

- einem Innenraumtemperatursensor zur Ermittlung des Istwerts der Innenraumtemperatur,
- einem Sollwertgeber zur Einstellung des Sollwerts der Innenraumtemperatur,
- einem Innenraumtemperaturregler, der unter anderem in Abhängigkeit von der Differenz des Istwerts und des Sollwerts der Innenraumtemperatur einen Sollwert für die Heiz- bzw. Kälteleistung der über Auslassöffnungen in den Innenraum des Fahrzeuges einströmenden Luft vorgibt,
- einem Ausblasluft-Temperatursensor zur Ermittlung der Temperatur der über die Auslassöffnungen in den Innenraum einströmenden Luft,
- einem Ausblas-Luftmengensensor zur Ermittlung der Geschwindigkeit bzw. des Durchsatzes der über die Auslassöffnungen in den Innenraum einströmenden Luft,
- mindestens einem Temperaturstellglied zur Verstellung der Temperatur der über die Auslassöffnungen in den Innenraum einströmenden Luft,

- mindestens einem Luftmengenstellglied zur Veränderung des Durchsatzes bzw. der Geschwindigkeit der über die Auslassöffnungen in den Innenraum einströmenden Luft und
- einem dem Innenraumtemperaturregler untergeordneten Ausblasluftregler zur Regelung der Temperatur und der Menge bzw. Geschwindigkeit der über die Auslassöffnungen in den Innenraum einströmenden Luft, und zwar zumindest in Abhängigkeit von der Differenz des von dem Innenraumtemperaturregler gelieferten Sollwerts für die Heiz- bzw. Kühlleistung und dem sich aus den Messwerten des Ausblasluft-Temperatursensors und des Ausblas-Luftmengensensors ergebenden Istwert für die Heiz- bzw. Kühlleistung der über die Auslassöffnungen in den Innenraum einströmenden Luft,
- wobei der Ausblasluftregler zur Minimierung des Absolutwerts der Differenz des Istwerts und des Sollwerts der Heiz- bzw. Kühlleistung der über die Auslassöffnungen in den Innenraum einströmenden Luft das Temperaturstellglied und das Luftmengenstellglied ansteuert.

Vorteilhafte Ausgestaltungen der Erfindung sind in den Unteransprüchen angegeben.

Bei der Erfindung wird die in den Fahrzeuginnenraum einströmende Luftmenge und die Lufttemperatur messtechnisch erfasst. Als Sensor dient hierbei insbesondere ein kombinierter Temperatur-Massenstromsensor, wie er z.B. in der nachveröffentlichten EP 1 080 956 A1 beschrieben ist.

Im Gegensatz zu den herkömmlichen Ausblasreglern wird bei der Erfindung nicht nur die Temperatur auf einen bestimmten Wert geregelt, sondern die Heizleistung $P_{Heiz}$ bzw. der Wärmestrom. Neben der Kompensation der Toleranzen in den Luftkanälen können die Regelstrategien durch den Einsatz eines Temperatur-Massenstromsensors erheblich vereinfacht werden, da auf die oben erwähnten Kennfelder größtenteils verzichtet werden kann. Darüber hinaus vereinfacht sich die Abstimmung der Klimaregler, die nicht zuletzt durch die Nichtlinearität der Ventilklappen in Bezug auf den Massenstrom sehr aufwendig ist, erheblich.

Das mit der Wärmekapazität multiplizierte Produkt aus Massenstrom und Temperaturdifferenz zwischen Innenraum und einströmender Luft bildet somit die Regelgröße für diesen Regelkreis. Aus Gleichung 1 ist zu erkennen, dass eine bestimmter Wert für die Heizleistung durch unterschiedliche Kombinationen von Massenstrom und Temperaturdifferenz eingestellt werden kann. So kann mit einer hohen Temperaturdifferenz und niedrigem Massenstrom die gleiche Heizleistung erzielt werden, wie mit etwas niedrigerer Temperaturdifferenz, dafür aber mit höherer Ausblasgeschwindigkeit. Das Verhältnis dieser beiden Größen beeinflusst den Komfort bei der Klimatisierung. Bei der Einstellung bzw. Abstimmung der Regelstrategie kann daher dieses Verhältnis jetzt auf das Temperaturempfinden des Menschen abgestimmt werden. Das Verhältnis von Temperaturdifferenz zu Massenstrom wird hier als Komfortkoeffizient $CC$ (Comfort Coefficient) bezeichnet.

$$CC = \frac{T_{in} - T_I}{\dot{m}_{in}} \qquad\qquad \text{Gl. 2}$$

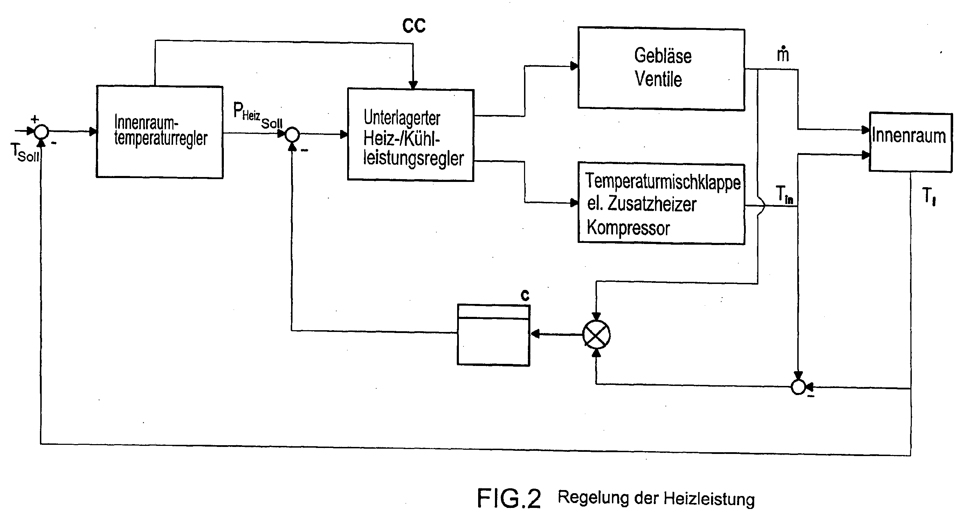

Der Komfortkoeffizient dient somit als Steuerparameter für die unterlagerte Regelung der Heizleistung. Ein Beispiel hierfür ist in Blockschaltbilddarstellung in Fig. 2 angegeben. Die Funktionen, die den einzelnen Blöcken zukommen, sind im Blockschaltbild kenntlich gemacht.

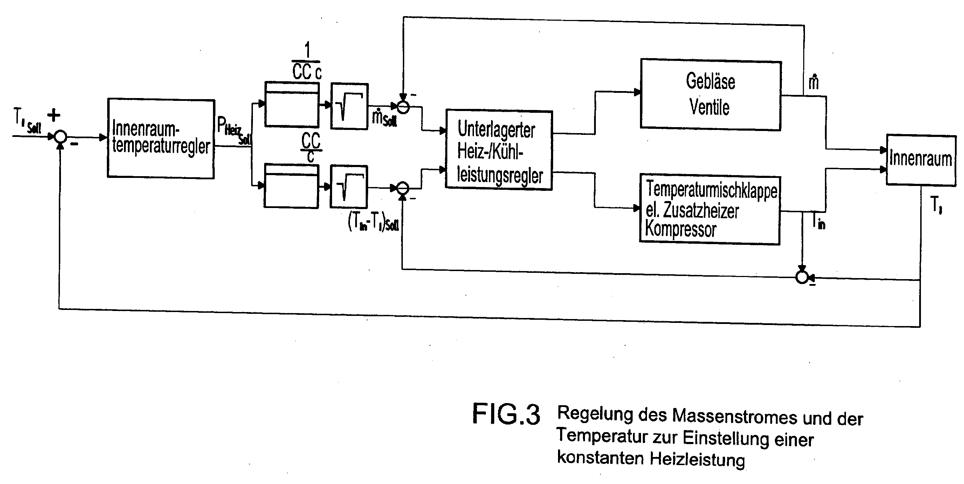

Ein weiteres Ausführungsbeispiel bildet die separate Regelung von Temperatur und Massenstrom durch zwei Regelschleifen, deren Sollwerte sich aus der geforderten Heizleistung und dem Komfortkoeffizienten errechnen (siehe Fig.3).

**Patentansprüche**

1.  Vorrichtung zur Regelung der Temperatur im Innenraum eines Fahrzeuges, mit

    - einem Innenraumtemperatursensor zur Ermittlung des Istwerts der Innenraumtemperatur,
    - einem Sollwertgeber zur Einstellung des Sollwerts der Innenraumtemperatur,
    - einem Innenraumtemperaturregler, der unter anderem in Abhängigkeit von der Differenz des Istwerts und des Sollwerts der Innenraumtemperatur einen Sollwert für die Heiz- bzw. Kälteleistung der über Auslassöffnungen in den Innenraum des Fahrzeuges einströmenden Luft vorgibt,
    - einem Ausblasluft-Temperatursensor zur Ermittlung der Temperatur der über die Auslassöffnungen in den Innenraum einströmenden Luft,

- mindestens einem Temperaturstellglied zur Verstellung der Temperatur der über die Auslassöffnungen in den Innenraum einströmenden Luft,
- mindestens einem Luftmengenstellglied zur Veränderung des Durchsatzes bzw. der Geschwindigkeit der über die Auslassöffnungen in den Innenraum einströmenden Luft und
- einem dem Innenraumtemperaturregler untergeordneten Ausblasluftregler zur Regelung der Temperatur und der Menge bzw. Geschwindigkeit der über die Auslassöffnungen in den Innenraum einströmenden Luft, und zwar zumindest in Abhängigkeit von der Differenz des von dem Innenraumtemperaturregler gelieferten Sollwerts für die Heiz- bzw. Kühlleistung und dem sich aus den Messwerten des Ausblasluft-Temperatursensors und des Ausblas-Luftmengensensors ergebenden Istwert für die Heiz- bzw. Kühlleistung der über die Auslassöffnungen in den Innenraum einströmenden Luft,

**gekennzeichnet durch**

- einen Ausblas-Luftmengensensor zur Ermittlung der Geschwindigkeit bzw. des Durchsatzes der über die Auslassöffnungen in den Innenraum einströmenden Luft,
- wobei der Ausblasluftregler zur Minimierung des Absolutwerts der Differenz des Istwerts und des Sollwerts der Heiz- bzw. Kühlleistung der über die Auslassöffnungen in den Innenraum einströmenden Luft das Temperaturstellglied und das Luftmengenstellglied ansteuert.

2. Vorrichtung nach Anspruch 1, **dadurch gekennzeichnet, dass** der Innenraumtemperaturregler einen ersten Sollwert für die Temperatur und einen zweiten Sollwert für die Menge bzw. die Geschwindigkeit der über die Auslassöffnungen in den Innenraum einströmenden Luft vorgibt und dass der Ausblasluftregler zur Minimierung der Differenz des Istwerts und des Sollwerts der Temperatur der über die Auslassöffnungen in den Innenraum einströmenden Luft und zur Minimierung der Differenz des Istwerts und des Sollwerts der Luftmenge bzw. Geschwindigkeit der über die Auslassöffnungen in den Innenraum einströmenden Luft das Temperaturstellglied und das Luftmengenstellglied ansteuert.

3. Vorrichtung nach Anspruch 1 oder 2, **dadurch gekennzeichnet, dass** das Luftmengenstellglied ein Motor ist, der ein Klappenventil ansteuert.

4. Vorrichtung nach Anspruch 1 oder 2, **dadurch gekennzeichnet, dass** das Luftmengenstellglied ein Luftgebläse ist.

5. Vorrichtung nach einem der Ansprüche 1 bis 4, **dadurch gekennzeichnet, dass** das Temperaturstellglied ein Motor ist, der ein Klappenventil zur Mischung unterschiedlich temperierter Luftströmungen ansteuert.

6. Vorrichtung nach einem der Ansprüche 1 bis 4, **dadurch gekennzeichnet, dass** das Temperaturstellglied ein Kompressor ist.

7. Vorrichtung nach einem der Ansprüche 1 bis 4, **dadurch gekennzeichnet, dass** das Temperaturstellglied ein elektrisches Heizelement ist.

**Claims**

1. A device for controlling the temperature in the interior of a vehicle, said device comprising

- an interior temperature sensor for detecting the actual value of the temperature in said interior,
- a set-point adjuster for setting the desired value of the interior temperature,
- an interior temperature controller for determining, *inter alia* in dependence on the difference between the actual value and the desired value of the interior temperature, a desired value for the heating power and cooling power, respectively, of the air streaming into the interior of the vehicle via outlet openings,
- a blowout air temperature sensor for detecting the temperature of said air streaming into the interior via the outlet openings,
- at least one temperature actuator for adjusting the temperature of said air streaming into the interior via the outlet openings,
- at least one air quantity actuator for adjusting the throughput and the speed, respectively, of said air streaming into the interior via the outlet openings, and
- a blowout air controller subordinate to the interior temperature controller, provided for controlling the temperature and the quantity and speed, respectively, of said air streaming into the interior via the outlet openings, at least in dependence on the difference between said desired value for the heating power and respectively cooling power as supplied by the interior temperature controller, and the actual value of the heating power and cooling power, respectively, of said air streaming into the interior via outlet openings, said actual value resulting from the measurement values of the blowout air temperature sensor and the blowout air quantity sensor,

**characterized by**

- a blowout air quantity sensor for detecting the speed and the throughput, respectively, of said air streaming into the interior via the outlet openings,
- said blowout air controller being arranged to control said temperature actuator and said air quantity actuator to minimize the absolute value of the difference between the actual value and the desired value of the heating power and cooling power, respectively, of said air streaming into the interior via the outlet openings.

2. The device according to claim 1, **characterized in that** the interior temperature controller determines a first desired value for the temperature and a second desired value for the quantity and the speed, respectively, of said air streaming into the interior via the outlet openings, and that said blowout air controller is arranged to control said temperature actuator and said air quantity actuator to minimize the difference between the actual value and the desired value of the temperature of said air streaming into the interior via the outlet openings, and to minimize the difference between the actual value and the desired value of the air quantity and the speed, respectively, of said air streaming into the interior via the outlet openings.

3. The device according to claim 1 or 2, **characterized in that** the air quantity actuator is a motor controlling a flap valve.

4. The device according to claim 1 or 2, **characterized in that** the air quantity actuator is an air blower.

5. The device according to any one of claims 1 to 4, **characterized in that** the temperature actuator is a motor controlling a flap valve for mixing air streams of different temperatures.

6. The device according to any one of claims 1 to 4, **characterized in that** the temperature actuator is a compressor.

7. The device according to any one of claims 1 to 4, **characterized in that** the temperature actuator is an electric heating element.

## Revendications

1. Dispositif de régulation de la température à l'intérieur d'un véhicule, comportant

- un capteur de température intérieure pour déterminer la valeur réelle de la température intérieure,
- un capteur de valeur de consigne pour régler la valeur de consigne de la température intérieure,
- un régulateur de température intérieure qui, entre autres en fonction de la différence entre la valeur réelle et la valeur de consigne de la température intérieure, spécifie une valeur de consigne pour la puissance de chauffage ou de refroidissement de l'air pénétrant à l'intérieur du véhicule par des orifices de distribution,
- un capteur de température de l'air de soufflage pour déterminer la température de l'air pénétrant à l'intérieur par les orifices de distribution,
- au moins un organe de réglage de température pour régler la température de l'air pénétrant à l'intérieur par les orifices de distribution,
- au moins un organe de réglage de la quantité d'air pour modifier le débit ou la vitesse de l'air pénétrant à l'intérieur par les orifices de distribution et
- un régulateur d'air de soufflage dépendant du régulateur de température intérieure, destiné au réglage de la température et du débit ou de la vitesse de l'air pénétrant à l'intérieur par les orifices de distribution, et ceci au moins en fonction de la différence entre la valeur de consigne délivrée par le régulateur de température intérieure pour la puissance de chauffage ou de refroidissement, et la valeur réelle résultant des valeurs de mesure du capteur de température de l'air de soufflage et du capteur de la quantité d'air de soufflage, pour la puissance de chauffage ou de refroidissement de l'air pénétrant à l'intérieur par les orifices de distribution,

**caractérisé par**

- un capteur de la quantité d'air de soufflage pour déterminer la vitesse ou le débit de l'air pénétrant à l'intérieur par les orifices de distribution,
- où le régulateur d'air de soufflage commande l'organe de réglage de la température et l'organe de réglage de la quantité d'air pour minimiser la valeur absolue de la différence entre la valeur réelle et la valeur de consigne de la puissance de chauffage ou de refroidissement de l'air pénétrant à l'intérieur par les orifices de distribution.

2. Dispositif selon la revendication 1, **caractérisé en ce que** le régulateur de température intérieure spécifie une première valeur de consigne pour la température et une deuxième valeur de consigne pour la quantité ou la vitesse de l'air pénétrant à l'intérieur par les orifices de distribution, et **en ce que** le régulateur d'air de soufflage commande l'organe de réglage de la température et l'organe de réglage de la quantité d'air pour minimiser la différence entre la valeur réelle et la valeur de consigne de la température de l'air pénétrant à l'intérieur par les orifices de distribution et pour minimiser la différence entre la valeur réelle et la valeur de consigne de la quantité ou de la vitesse de l'air pénétrant à l'intérieur par les orifices de distribution.

3. Dispositif selon la revendication 1 ou 2, **caractérisé en ce que** l'organe de réglage de la quantité d'air est un moteur qui commande une soupape à clapet.

4. Dispositif selon la revendication 1 ou 2, **caractérisé en ce que** l'organe de réglage de la quantité d'air est un ventilateur.

5. Dispositif selon l'une des revendications 1 à 4, **caractérisé en ce que** l'organe de réglage de la température est un moteur qui commande une soupape à clapet pour mélanger des courants d'air présentant des températures différentes.

6. Dispositif selon l'une des revendications 1 à 4, **caractérisé en ce que** l'organe de réglage de la température est un compresseur.

7. Dispositif selon l'une des revendications 1 à 4, **caractérisé en ce que** l'organe de réglage de la température est un élément de chauffage électrique.

FIG.1  Innenraummodell

FIG.2   Regelung der Heizleistung

EP 1 190 877 B1

FIG.3 Regelung des Massenstromes und der Temperatur zur Einstellung einer konstanten Heizleistung

EP 1 190 877 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4214687 A1
- EP 1080956 A1